# EUROPÄISCHE PATENTSCHRIFT

(11) **EP 3 589 858 B1**
(45) Veröffentlichungstag und Bekanntmachung des Hinweises auf die Patenterteilung: **01.06.2022**
(21) Anmeldenummer: 18709977.5
(22) Anmeldetag: 01.03.2018
(51) Int. Cl.: F16D 55/28

(54) **BREMSE EINER GROSSWINDKRAFTANLAGE**
BRAKE OF A LARGE WIND TURBINE
FREIN DE GRANDE ÉOLIENNE

(30) Priorität: 03.03.2017 DE 102017203497
(43) Veröffentlichungstag der Anmeldung: 08.01.2020
(73) Patentinhaber: Aktiebolaget SKF, 415 50 Göteborg (SE)
(72) Erfinder: GLAENTZ, Wolfgang, 97422 Schweinfurt (DE); KERN, Henning, 97456 Dittelbrunn (DE); LIESEGANG, Hans-Jürgem, 26419 Schortens (DE)
(74) Vertreter: Kohl, Thomas
(86) Internationale Anmeldenummer: PCT/EP2018/055049
(87) Internationale Veröffentlichungsnummer: WO 2018/158368

(56) Entgegenhaltungen:
- EP-A1- 2 290 251
- EP-A1- 2 479 428
- DE-B3-102012 202 438
- DE-U1- 9 402 867
- DE-U1-202011 050 344

## Beschreibung

Die Erfindung betrifft eine Feststellbremse einer Großwindkraftanlage.

Bei Großwindkraftanlagen sind Feststellsysteme für zum Drehen vorgesehene Rotationsteile bekannt, die nach dem Prinzip eines einschiebbaren Blockierriegels arbeiten. Derartige Feststellsystem sind aufgrund der auszuhaltenden Kräfte massiv, voluminös, schwergewichtig und damit auch kostenintensiv.

Beispielsweise aus der EP 2 479 428 A1 ist ein vorausgehend genanntes Feststellsystem einer Großwindkraftanlage mit einschiebbarem Blockierriegel bekannt, was dort als Arretierungsvorrichtung bezeichnet ist.

Eine Aufgabe der Erfindung ist es, diesbezüglich eine Verbesserung zu schaffen.

Diese Aufgabe wird durch den Gegenstand des Anspruchs 1 gelöst. Vorteilhafte Ausgestaltungen sind in den Unteransprüchen beschrieben.

Die Erfindung beruht unter anderem auf dem Erkennen folgender Nachteile bisheriger Lösungen: Bei einer der bisherigen Lösungen für ein sicheres Drehblockieren einer Hauptwelle einer Großwindkraftanlage ist die Hauptwelle mit einer massiven, dicken, beilegscheibenartig ausgebildeten, die Hauptwelle umschließenden Scheibe verbunden, wobei die Scheibe in Umfangsrichtung verteilt axiale Durchdringungen aufweist. Im Zusammenspiel mit besagter Scheibe ist eine Arretiervorrichtung vorgesehen, mit der ggf. hydraulisch angetrieben ein massiver Riegel in eine der Durchdringungen eingeschoben werden kann, so dass dann die Hauptwelle sicher drehblockiert ist. Um die notwenigen Haltekräfte zu beherrschen, ist die axiale Dicke der Scheibe hinreichend groß. Entsprechendes gilt für den Riegel. Oftmals sind mehrere dieser Riegelmechanismen über den Umfang verteilt notwendig. Schließlich wird üblicherweise die Stellung, in der der oder die Riegel überhaupt in die Durchdringung(en) eingefahren werden können, durch manuelles Steuern eingestellt, so dass das Risiko besteht, dass bei einem nicht exakten Fluchten die Hydraulik die Riegel außerhalb der Durchdringungen gegen die Scheibe drückt, was zu entsprechenden, teilweise schwerwiegenden Schäden führt, beispielsweise auch Schäden der die Hauptwelle lagernden Wälzlagerungen aufgrund der übermäßigen Belastung in axialer Richtung.

Durch die erfindungsgemäße Lösung werden vorgenannte Nachteile vermieden. Die Gefahr von Schäden, infolge vergleichbarer Fehlbetätigung, ähnlich der vorausgehend beschriebenen, ist inhärent ausgeschlossen. Mit weiterem Vorteil kann zu besagter Inhärenz eine Sensorik hinzukommen, die in Verbindung mit einer entsprechenden Steuer- und Kontrolleinheit auch weniger schwerwiegende Fehlbetätigungen sicher unterbindet. Gemäß der Erfindung wird ein Betätigen der erfindungsgemäßen Feststellbremse erst erlaubt, wenn ein vollständiger oder annähernder Stillstand der Hauptwelle durch die Sensorik festgestellt worden ist. Weiterhin kann die Verdrehstellung der einzelnen Rotorblätter und/oder die Verdrehposition der Einheit aus den üblicherweise drei Rotorblättern gegenüber dem Turm der Großwindkraftanlage mit einbezogen werden.

Aufgrund der beispielsweise bremsscheibenartigen Funktionsweise der erfindungsgemäßen Lösung kann die Scheibe sehr viel weniger massiv, insbesondere dünner ausgebildet werden, was einen erheblichen Gewichts- und Kostenvorteil bedeutet. Insbesondere bei Ausbildung des Bremsenantriebs als Elektroaktuator kann auf die sonst übliche Hydraulik verzichtet werden. Wird dies insbesondere mit einer selbsthemmenden bzw. selbstblockierenden Ausbildung des Elektroaktuators kombiniert, entsteht in besonders einfacher Weise ein System, das auch bei einem Energieausfall die Blockierung der Hauptwelle sicher aufrechterhält. Im Falle einer hydraulisch betätigten Bremse kann dies durch eine entsprechend gesicherte Ausbildung des Hydrauliksystems oder durch zusätzliche mechanische Sicherungsmaßnahmen ebenfalls gewährleistet werden.

Weitere Vorteile, Merkmale und Einzelheiten der Erfindung ergeben sich aus dem im Folgenden beschriebenen Ausführungsbeispielen der Erfindung anhand der Figuren. Dabei zeigen:
Figur 1 eine Prinzipskizze eines Turmhauses einer Windenergieanlage mit einem erfindungsgemäßen Bremssystem und
Figur 2 eine Ausschnittsvergrößerung im Bereich des Bremssystems aus Figur 1.

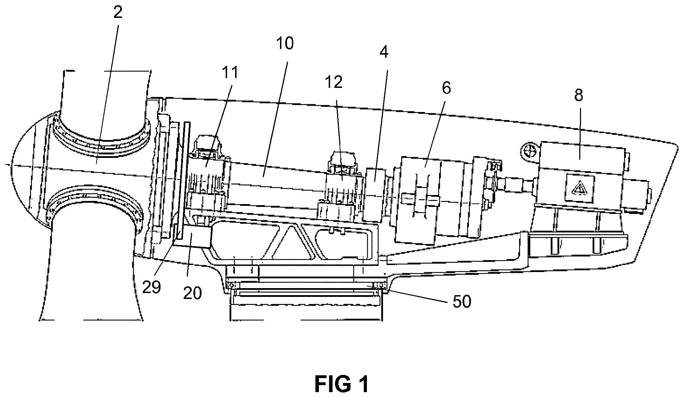

Die Figur 1 zeigt in Form einer Prinzipskizze, teilweise in Schnittdarstellung das Innere eines Turmhauses bzw. einer Gondel einer Großwindkraftanlage, insbesondere im Multimegawattbereich mit einem erfindungsgemäßen Bremssystem. Im Turmhaus befindet sich dabei eine Hauptwelle 10 der Windkraftanlage, an deren linken axialen Ende die Rotorblattnabe 2 mit typischerweise drei verschwenkbare Rotorblättern mit der Hauptwelle 10 verbunden ist. Am rechten axialen Ende der Hauptwelle 10 ist diese über eine Kupplung 4 mit einem Getriebe 6 verbunden, wobei auf der anderen Seite das Getriebe 6 wiederum mit einem Generator 8 zur elektrischen Energieerzeugung verbunden ist. Das Turmhaus ist dabei über ein Turmhauslager 50 drehbar auf einem Turm der Großwindkraftanlage gelagert.

Die Hauptwelle 10 ist über zwei Wälzlagerungen drehbar im Turmhaus gelagert. Die linke Wälzlagerung ist dabei als ein Toroidalrollenlager 11, was auch als CARB-Lager bekannt ist, ausgebildet und die rechte als ein Pendelrollenlager 12. In anderen Ausführungen sind natürlich auch andere Lagertypen möglich, insbesondere ein zweireihiges Kegelrollenlager in O-Anordnung, oder auch Zylinderrollenlager. In wiederum anderen Ausführungsformen kann auch nur eine Wälzlagerung vorhanden sein, wobei dann sozusagen das Getriebe 6 als zweite Lagerstelle fungieren kann.

Damit beispielsweise zum Durchführen von Wartungsarbeiten eine Person den Rotorblattnabenbereich betreten kann und darf, muss unter allen Umständen sichergestellt sein, dass die Hauptwelle 10 keine Dreh- oder Verschwenkbewegungen ausführt, da ansonsten Leib und Leben der Wartungsperson im Rotorblattnabenbereich gefährdet wäre. Dazu ist das erfindungsgemäße Bremssystem vorgesehen, das im beschriebenen Ausführungsbeispiel nach Art einer bremsscheibenbasierten Feststellbremse ausgebildet ist. Das Bremssystem umfasst dabei eine mit der Hauptwelle 10 fest verbundene Bremsscheibe 29 in Verbindung mit einer mit dem Turmhaus fest verbundenen Bremsgrundeinheit 20. Dabei kann je nach Anlagengröße, Dimensionierung und Auslegung lediglich die eine Bremsgrundeinheit 20 vorgesehen sein; es können aber auch mehrere über den Umfang der Bremsscheibe 29 verteilt angeordnete Bremsgrundeinheiten 20 vorgesehen sein.

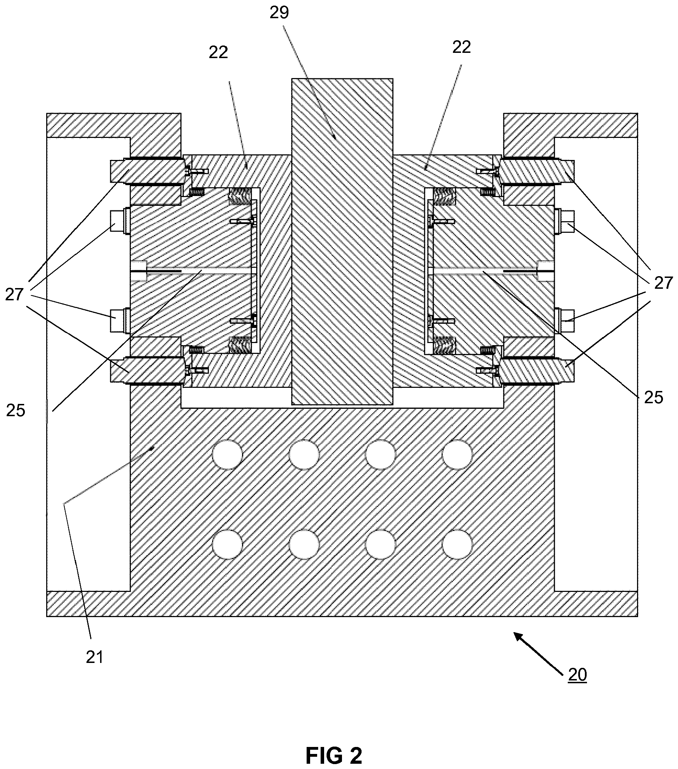

Die Figur 2 zeigt einen Längsschnitt durch das Bremssystem der Figur 1 im Bereich der Bremsgrundeinheit 20. Beim normalen Betrieb dreht sich die Bremsscheibe 29 mit der Hauptwelle 10 so mit, dass keine oder zumindest keine nennenswerte Berührung mit Teilen der Bremsgrundeinheit 20 stattfin-det. Beispielsweise für Wartungsarbeiten im Rotorblattnabenbereich wird die Hautwelle 10 der Windkraftanlage z.B. durch entsprechende Rotorblattverstellung und/oder eine zwischen dem Getriebe 6 und dem Generator 8 angeordnete Bremse zum Stillstand gebracht. Danach werden die sozusagen als Hydraulikzylinder ausgebildeten Bremsklötze 22 durch entsprechende hydraulische Druckbeaufschlagung über die Hydraulikkanäle 25 in axialer Richtung gegen die Bremsscheibe 29 gedrückt. Die Hydraulikkanäle 25 sind dabei in einem fest mit dem Turmhaus verbundenen Grundkörper 21 der Bremsgrundeinheit 20 ausgebildet.

Ferner sind die Bremsklötze 22 auf ihrer der Bremsscheibe 29 zugewandten Stirnfläche reibbeschichtet, so dass beim Andrücken zwischen den Bremsklötzen 22 und der Bremsscheibe 29 ein Mikroformschluss erzeugt ist. Alternativ kann die Reibbeschichtung anstatt direkt auf die Stirnseiten der Bremsklötze 22 auch auf eine mit den Bremsklötzen 22 verbundene, insbesondere daran angeschraubte Scheibe, aufgebracht sein.

Die Oberflächen, auf die die Reibbeschichtung aufgebracht ist, sind dabei beispielsweise durch ein Zirkularfräsen mit einer gemittelten Rautiefe R_{Z} von 10 µm oder besser oder auch durch ein Feindrehen mit einer mittleren Rauheit Rₐ gleich 1,6 µm oder besser quer zur Bearbeitungsrichtung und Rₐ gleich 0,7 µm oder besser längs zur Bearbeitungsrichtung erzeugt. In anderen Ausführungen kann zusätzlich oder alternative natürlich auch geschliffen und/oder gehont werden.

Herstellungstechnisch wird dabei auf der Oberfläche galvanisch eine Unterbeschichtung aus Nickel mit einer Dicke von beispielsweise ca. 2 bis maximal 5 µm aufgebracht. Auf diese Unterbeschichtung werden dann die Hartstoffpartikel mit einer Mohshärte von größer gleich 7, insbesondere von 10, und einer nach einem Sieben im Mittel im Bereich von 35 bis 48 µm liegenden Partikelgröße aufgelegt. Insbesondere wird ein Industriediamantenpulver mit der Siebkörnung D46 verwendet. Daran anschließend wird ebenfalls galvanisch eine Oberbeschichtung aus Nickel aufgebracht, so dass die auf der Unterbeschichtung aufgelegten Partikel wenigstens in ihrem unteren Bereich hin zur Unterbeschichtung von der Oberbeschichtung umschlossen sind, so dass die Partikel quasi einlagig fixiert sind. Insbesondere ist die Dicke der Oberbeschichtung so gewählt, dass in etwa die Hälfte der Partikelgröße in der Oberbeschichtung eingebettet ist. Somit ist eine Reibbeschichtung geschaffen, bei der die Diamantpartikel sicher in der Nickelschicht fixiert sind und im Mittel uniform aus der Nickelfixierschicht herausragen. In vorteilhafter Weise sind damit hohe bis sehr hohe Reibwerte von bis zu µ ≥ 0,65 erzielbar. Beim Andrücken der Bremsklötze 22 an die Bremsscheibe 29 drücken sich die herausragenden Teile der Diamantpartikel besagten Mikroformschluss ausbildend in die Bremsscheibe 29 ein, die gegenüber den Diamantpartikeln aus einem weicheren Material, insbesondere einem Stahl oder Kugelgraphitguss, ausgebildet ist. Für den Formschluss ist es dabei wichtig, dass mit dem Andrücken die notwendige Flächenpressung, insbesondere im Bereich von 80 bis 180 MPa, aufgebracht wird.

Damit auch im Falle eines Hydraulikdruckverlustes die Hauptwelle 10 sicher fixiert bleibt, sind im angedrückten Zustand Fixierungsbolzen 27 einschraubbar, die die Bremsposition der Bremsklötze 22 auch bei einem Hydraulikdruckabfall aufrechterhalten. Ein vergleichbarer Wirkeffekt kann alternative auch mit einem entsprechend gesichert ausgebildeten Hydrauliksystem erzielt werden.

In nicht näher dargestellter Art und Weise kommt mit Vorteil eine Sensorik hinzu, die in Verbindung mit einer entsprechenden Steuer- und Kontrolleinheit unter anderem Fehlbetätigungen des Bremssystems sicher unterbindet. Dabei wird ein Betätigen der erfindungsgemäßen Feststellbremse erst erlaubt, wenn ein vollständiger oder annähernder Stillstand der Hauptwelle 10 durch die Sensorik festgestellt worden ist. Weiterhin kann die Verdrehstellung der einzelnen Rotorblätter und/oder die Verdrehposition der Einheit aus den drei Rotorblättern gegenüber dem Turm der Großwindkraftanlage und/oder ein Überwachen der Klemmkraft der Bremse mit einbezogen sein. Die Steuer- und Kontrolleinheit kann in diesem Zusammenhang natürlich auch derart ausgebildet sein, dass das Steuern, Regeln und Überwachen auch aus der Ferne erfolgen kann, was beispielsweise mit Vorteil ein Betätigung der Bremse über eine Fernwartung ermöglicht.

Anstelle der hydraulischen Betätigung kann auch elektroaktuatorisch betätigt werden. Dabei kann auf die sonst übliche Hydraulik verzichtet werden. Sind dabei insbesondere Elektroaktuatoren in selbsthemmender bzw. selbstblockierender Ausbildung, beispielsweise einen Rollengewindetrieb verwendend, eingesetzt, entsteht in besonders einfacher Weise ein System, dass auch bei einem Energieausfall die Blockierung der Hauptwelle aufrechterhält.

In einer anderen Ausführung kann das erfindungsgemäße Bremssystem auch trommelbremsenartig ausgebildet sein, indem anstelle der Bremsklötze 22 und der Bremsscheibe 29 wenigstens ein entsprechend geformter Bremsbacken radial gegen einen dazu speziell ausbildeten zylindrischen Bereich der Hauptwelle oder gegen einen die Hauptwelle umschließenden, mit ihr fest verbundenen Hohlzylinder zum Drücken vorgesehen ist.

In wiederum anderen Ausführung kann ergänzend oder alternativ natürlich auch das Turmhauslager 50 mit einem erfindungsgemäßen Bremssystem ausgerüstet sein.

## Patentansprüche

1. Feststellbremse einer Großwindkraftanlage, wobei mit der Feststellbremse ein zum Drehen vorgesehenes Rotationsteil (29) festsetzbar ist, indem ein gegenüber dem Rotationsteil nicht zum Mitdrehen vorgesehenes Andrückteil (22) gegen das Rotationsteil andrückbar ist, **dadurch gekennzeichnet, dass** die Feststellbremse derart ausgebildet ist, dass ein Betätigen der Feststellbremse erst erlaubt ist, wenn ein vollständiger oder annähernder Stillstand festgestellt worden ist, und dass sich beim Andrücken der Teile aneinander zwischen den Teilen ein Mikroformschluss ausbildet.

2. Feststellbremse nach Anspruch 1, wobei das Rotationsteil eine Hauptwelle (10) der Großwindkraftanlage, insbesondere einer Multimegawattanlage, umfasst, oder das Rotationsteil das Turmhaus oder die Gondel der Großwindenergieanlage umfasst, und die Feststellbremse insbesondere im Bereich eines Drehlagers (50) zwischen dem Turmhaus bzw. der Gondel und einem Turm der Großwindkraftanlage angeordnet und ausgebildet ist.

3. Feststellbremse nach einem der Ansprüche 1 oder 2, wobei das Andrückteil einen Bremsklotz (22) oder einen Bremsbacken umfasst, wobei der Bremsbacken insbesondere in Radialrichtung gegen einen zylindrischen Umfangsbereich des Rotationsteils drückbar ist.

4. Feststellbremse nach einem der Ansprüche 1 bis 3, wobei die Feststellbremse eine Bremsscheibe (29) umfasst, die drehfest mit dem Rotationsteil verbunden oder vom Rotationsteil ausgebildet ist.

5. Feststellbremse nach Anspruch 4, wobei die Feststellbremse wenigstens zwei Bremsklötze (22) umfasst, die aufeinander gegenüberliegenden Seiten der Bremsscheibe (29) gegen diese drückbar sind, wobei auch mehrere Bremsklotzpaare in Umfangsrichtung der Bremsscheibe (29) verteilt angeordnete sein können.

6. Feststellbremse nach einem der Ansprüche 1 bis 5, wobei die Feststellbremse für das Andrücken des Andrückteils wenigstens einen insbesondere elektromotorischen und/oder selbsthemmend ausgebildeten Linearaktuator umfasst, der insbesondere einen Rollengewindetrieb beinhaltet.

7. Feststellbremse nach einem der Ansprüche 1 bis 6, wobei die Feststellbremse für das Andrücken des Andrückteils wenigstens eine Hydraulickomponente eines Hydrauliksystems umfasst, und die Hydraulikkomponente oder das -system derart ausgebildet oder eine insbesondere mechanisch wirkende Sicherungseinrichtung vorgesehen sein kann, dass bei einem Hydrauliksystemfehler das Andrücken aufrechterhalten bleibt.

8. Feststellbremse nach einem der Ansprüche 1 bis 7, wobei die Feststellbremse wenigstens Teile eines Sensor- und Kontrollsystems umfasst, so dass das Betätigen der Feststellbremse in Abhängigkeit von einer Drehwinkelposition und/oder Drehzahl des Rotationsteils und/oder die Andrückkraft auch von der Ferne aus steuer-, regel- und/oder überwachbar sind

9. Feststellbremse nach einem der Ansprüche 1 bis 8, wobei für den Mikroformschluss eine Reibbeschichtung vorgesehen ist, bei der Hartstoffpartikel aus einer insbesondere Nickel umfassenden Schicht herausragen, wobei die Hartstoffpartikel insbesondere Diamantpartikel sind, deren Partikelgröße nach Siebung im Mittel insbesondere im Bereich von 35 bis 48 µm ist.

10. Feststellbremse nach Anspruch 9, wobei die Reibbeschichtung unmittelbar auf dem Andrückteil, dem Bremsklotz (22) oder -baken, oder auf einem damit insbesondere durch Schrauben verbindbaren insbesondere scheiben- oder plattenartigen Träger aufgebracht ist, und das Rotationsteil wenigstens im für das Andrücken vorgesehenen Bereich aus einem gegenüber den Hartstoffpartikeln weicheren Material, insbesondere einem Stahl ausgebildet ist.

## Claims

1. Locking brake for a large wind turbine, wherein the locking brake can be used to lock a rotary part (29) that is designed to rotate, this being made possible by a pressure part (22) that is not intended to rotate together with the rotary part and that can be pressed against the rotary part, **characterized in that** the locking brake is designed in such a way that actuation of the locking brake is permitted only when a completely or near-completely stationary state has been established, and **in that** a micro-form fit is established between the parts when the parts are pressed against one another.

2. Locking brake according to Claim 1, wherein the rotary part comprises a main shaft (10) of the large wind turbine, in particular of a multi-megawatt turbine, or the rotary part comprises the gondola or the nacelle of the large wind turbine, and the locking brake is arranged and formed in particular in the region of a pivot bearing (50) between the gondola or the nacelle and a tower of the large wind turbine.

3. Locking brake according to either of Claims 1 and 2, wherein the pressure part comprises a brake block (22) or a brake shoe, wherein the brake shoe can be pressed in particular in the radial direction against a cylindrical periphery region of the rotary part.

4. Locking brake according to one of Claims 1 to 3, wherein the locking brake comprises a brake disk (29) that is connected so as to rotate as one with the rotary part, or is formed from the rotary part.

5. Locking brake according to Claim 4, wherein the locking brake comprises at least two brake blocks (22) which, being on mutually opposite sides of the brake disk (29), can be pressed against the latter, it being also possible for multiple brake block pairs to be arranged distributed in the circumferential direction of the brake disk (29).

6. Locking brake according to one of Claims 1 to 5, wherein the locking brake comprises, for pressing the pressure part, at least one linear actuator which is in particular electromotive and/or designed to be self-locking, and which in particular contains a roller screw drive.

7. Locking brake according to one of Claims 1 to 6, wherein the locking brake comprises, for pressing the pressure part, at least one hydraulic component of a hydraulic system, and the hydraulic component or the hydraulic system can be designed, or an in particular mechanically operating securing device can be provided, such that the pressure is maintained in the event of a hydraulic system fault.

8. Locking brake according to one of Claims 1 to 7, wherein the locking brake comprises at least parts of a sensor and control system so that the actuation of the locking brake, in dependence on a rotary angular position and/or a rotational speed of the rotary part, and/or the pressing force can be monitored and/or controlled in open-loop or closed-loop fashion, also remotely.

9. Locking brake according to one of Claims 1 to 8, a friction coating being provided for the micro-form fit, this coating having particles of hard material that project from an in particular nickel-containing layer, the hard material particles being in particular diamond particles having an average particle size, after screening, that is in particular in the region of 35 to 48 µm.

10. Locking brake according to Claim 9, the friction coating being applied directly to the pressure part, the brake block (22) or brake shoe, or to an in particular disk- or plate-like carrier that can be connected thereto in particular using screws, and the rotary part is made, at least in the region intended for pressing, of a material that is softer than the hard material particles, in particular a steel.

## Revendications

1. Frein d'arrêt d'une grande éolienne, une partie rotative (29) destinée à tourner pouvant être fixée à l'aide du frein d'arrêt, par le fait qu'une partie de pression (22) destinée à ne pas tourner conjointement avec la partie rotative peut être pressée contre la partie rotative, **caractérisé en ce que** le frein d'arrêt est réalisé de telle sorte qu'un actionnement du frein d'arrêt n'est autorisé que lorsqu'un arrêt complet ou approximatif a été détecté, et **en ce qu'**un micro-engagement par complémentarité de formes est réalisé entre les parties lorsque les parties sont pressées l'une contre l'autre.

2. Frein d'arrêt selon la revendication 1, la partie rotative comportant un arbre principal (10) de la grande éolienne, en particulier d'une installation multimégawatts, ou la partie rotative comportant le carter de tour ou la nacelle de la grande éolienne, et le frein d'arrêt étant disposé et réalisé en particulier dans la région d'un palier rotatif (50) entre le carter de tour ou la nacelle et une tour de la grande éolienne.

3. Frein d'arrêt selon l'une des revendications 1 ou 2, la partie de pressage comportant un sabot de frein (22) ou une mâchoire de frein, la mâchoire de frein pouvant être pressée en particulier dans la direction radiale contre une région périphérique cylindrique de la partie rotative.

4. Frein d'arrêt selon l'une des revendications 1 à 3, le frein d'arrêt comportant un disque de frein (29) qui est relié de manière solidaire en rotation à la partie rotative ou est formé par la partie rotative.

5. Frein d'arrêt selon la revendication 4, le frein d'arrêt comportant au moins deux sabots de frein (22), les côtés opposés du disque de frein (29) pouvant être pressés contre ceux-ci, plusieurs paires de sabots de frein pouvant également être disposées de manière répartie dans la direction périphérique du disque de frein (29).

6. Frein d'arrêt selon l'une des revendications 1 à 5, le frein d'arrêt comportant, pour le pressage de la partie de pressage, au moins un actionneur linéaire en particulier à moteur électrique et/ou réalisé de manière autobloquante, lequel comporte en particulier un entraînement à vis à rouleaux.

7. Frein d'arrêt selon l'une des revendications 1 à 6, le frein d'arrêt comportant, pour le pressage de la partie de pressage, au moins un composant hydraulique d'un système hydraulique, et le composant hydraulique ou le système hydraulique étant réalisé, ou un dispositif de sécurité agissant en particulier mécaniquement pouvant être prévu, de telle sorte que le pressage soit maintenu en cas de défaillance du système hydraulique.

8. Frein d'arrêt selon l'une des revendications 1 à 7, le frein d'arrêt comportant au moins des parties d'un système de détection et de contrôle, de telle sorte que l'actionnement du frein d'arrêt peut être commandé, régulé et/ou surveillé en fonction d'une position angulaire de rotation et/ou d'une vitesse de rotation de la partie rotative et/ou de la force de pressage même à distance.

9. Frein d'arrêt selon l'une des revendications 1 à 8, un revêtement à friction étant prévu pour le micro-engagement par complémentarité de formes, revêtement dans lequel des particules de matière dure dépassent d'une couche comportant en particulier du nickel, les particules de matière dure étant en particulier des particules de diamant dont la taille de particule après tamisage est en particulier dans la plage de 35 à 48 µm en moyenne.

10. Frein d'arrêt selon la revendication 9, le revêtement à friction étant appliqué directement sur la partie de pressage, le sabot de frein (22) ou la mâchoire de frein, ou sur un support en particulier en forme de disque ou de plaque pouvant être relié à ceux-ci en particulier par des vis, et la partie rotative étant formée, au moins dans la région prévue pour le pressage, à partir d'une matière plus tendre que les particules de matière dure, en particulier à partir d'un acier.
